# EUROPÄISCHE PATENTSCHRIFT

(11) **EP 3 472 478 B1**
(45) Veröffentlichungstag und Bekanntmachung des Hinweises auf die Patenterteilung: **09.09.2020**
(21) Anmeldenummer: 17730690.9
(22) Anmeldetag: 29.05.2017
(51) Int. Cl.: F16C 3/02

(54) **ROTATIONSSYMMETRISCHER HOHLKÖRPER UND VERFAHREN ZU DESSEN HERSTELLUNG**
ROTATIONALLY SYMMETRICAL HOLLOW BODY, AND METHOD FOR PRODUCING THE SAME
CORPS CREUX À SYMÉTRIE DE ROTATION ET PROCÉDÉ POUR SA FABRICATION

(30) Priorität: 17.06.2016 DE 102016111128
(43) Veröffentlichungstag der Anmeldung: 24.04.2019
(73) Patentinhaber: Schmidt Automotive GmbH, 73463 Westhausen-Lippach (DE)
(72) Erfinder: SCHMIDT, Herbert, 73463 Westhausen-Lippach (DE)
(74) Vertreter: Mammel und Maser
(86) Internationale Anmeldenummer: PCT/EP2017/062930
(87) Internationale Veröffentlichungsnummer: WO 2017/215906

(56) Entgegenhaltungen:
- DE-A1- 4 221 708
- DE-A1- 19 934 405
- DE-A1-102013 223 685
- DE-C1- 3 413 457
- DE-U1- 9 410 220
- JP-A- H11 309 526
- JP-A- 2014 008 809

## Beschreibung

Die Erfindung betrifft einen rotationssymmetrischen Hohlkörper sowie ein Verfahren zu dessen Herstellung.

In verschiedenen technischen Anwendungsbereichen, insbesondere im Motorenbau, steht der Leichtbau im Vordergrund. Bei rotierenden Bauteilen, wie beispielsweise Antriebswellen, Nockenwellen oder sonstigen Wellen, werden diese aus einem Vollmaterial hergestellt. Dadurch können Funktionsbereiche, beispielsweise durch Einbringung von Bohrungen, Stiften, Federn oder dergleichen, in einfacher Weise gebildet werden.

Der Einsatz von rotationssymmetrischen Hohlkörpern, wie Hohlwellen oder dergleichen, zur Erzielung des Leichtbaus ist grundsätzlich bekannt. Allerdings ist dabei bislang die Bildung von Funktionsbereichen erschwert oder nicht gelungen. Beispielsweise besteht beim Einbringen von einem Querstift in eine Hohlwelle zur Bildung des Funktionsbereiches in der Hohlwelle das Problem, dass dieser Querstift bei einer nachfolgenden Wärmebehandlung oder Härtebehandlung seine vorgesehene Position nicht einhalten kann.

Aus der DE 34 13 457 C2 ist eine gekühlte Laufbuchse für Brennkraftmaschinen bekannt. Die Laufbuchse umfasst Kühlmittel-Führungsbohrungen, in welche ein Rohr zur Kühlmittelführung eingesetzt ist. Durch eine Ovalverformung des Rohres wird ein fester Sitz des Rohres in der Laufbuchse ermöglicht.

Aus der DE 10 2013 223 685 A1 ist ein Verschlussstopfen für eine Nockenwelle mit einer Dichtkappe bekannt. Der Verschlussstopfen wird gemeinsam mit der Dichtkappe von einem Ende in die Nockenwelle eingesetzt. Zur Fixierung des Verschlussstopfens ist ein Einpressen des Verschlussstopfens in die Nockenwelle vorgesehen. Dadurch ist auch eine Demontage ermöglicht.

Der Erfindung liegt die Aufgabe zugrunde, einen rotationssymmetrischen Hohlkörper sowie ein Verfahren zu dessen Herstellung vorzuschlagen, welcher einerseits eine Leichtbauweise und andererseits die Ausbildung von Funktionsbereichen wie bei einer Vollwelle ermöglicht.

Diese Aufgabe wird durch einen rotationssymmetrischen Hohlkörper gelöst, bei welcher in einem Hohlraum eines Grundkörpers des rotationssymmetrischen Hohlkörpers, der sich entlang der Längsachse des Grundkörpers erstreckt, zumindest ein Füllkörper eingesetzt wird, wobei die Längsachse des Füllkörpers kleiner als die Längsachse des Grundkörpers ist und der Füllkörper zum Grundkörper in einer Fixierposition durch zumindest eine Klemmung fixiert ist, so dass der Füllkörper einen Funktionsbereich für den rotationssymmetrischen Hohlkörper bildet. Diese Anordnung ermöglicht, dass nur in dem Bereich des Grundkörpers, in dem der Funktionsbereich vorliegen soll, der Füllkörper eingesetzt wird und somit der Füllkörper mit dem Grundkörper ähnlich zu einem Vollquerschnitt ist oder einem Vollquerschnitt entspricht. Benachbart dazu erstreckt sich der Hohlraum im Grundkörper, so dass eine Massenreduzierung erzielt wird. Durch die Positionierung des Füllkörpers innerhalb des Hohlkörpers und der Einbringung von zumindest einer Klemmung kann auch bei einer nachgeschalteten Bearbeitung, wie beispielsweise eine Wärme- und/oder Härtebehandlung oder eine spanabhebende Bearbeitung des rotationssymmetrischen Hohlkörpers der Funktionsbereich aufrechterhalten bleiben.

Bevorzugt weist der Füllkörper einen Außenumfang mit zumindest einer Anlagefläche auf, die zumindest abschnittsweise der Kontur der Innenwand des Hohlraums entspricht und der korrespondierende Außenumfang kleiner als der Innenumfang ausgebildet ist. Dies ermöglicht, dass der Füllkörper in einfacher Weise in den Hohlraum des Grundkörpers einsetzbar und entlang diesem in axialer Richtung verfahrbar oder verschiebbar ist, bis dieser in einer Fixierposition angeordnet ist, in der nach der Einbringung der zumindest einen Klemmung der Funktionsbereich auszubilden ist. Durch die zumindest abschnittsweise ausgebildete Anlagefläche am Außenumfang des Füllkörpers können darüber hinaus weitere Funktionen erfüllt werden. Beispielsweise kann ein erleichtertes Einbringen in den Hohlkörper gegeben sein, da zwischen den Anlageflächen hierfür Funktionsflächen ausgebildet sein können. Darüber hinaus können durch die Bereiche zwischen den Anlageflächen weitere Funktionen, wie beispielsweise eine Drosselstelle für ein Fluid, geschaffen werden.

Des Weiteren ist bevorzugt zumindest eine abschnittsweise ausgebildete und den Außenumfang bildende Anlagefläche des Füllkörpers mit einer Übergangs- oder Spielpassung zu der Innenwand des Hohlraums bemessen. Dies ermöglicht einerseits ein einfaches Einsetzen des Füllkörpers in den Hohlraum des Grundkörpers, und andererseits wird dies durch eine geringe Verformung der Wand des Grundkörpers bei einer Klemmung mit dem Füllkörper erzielt.

Die Klemmung zwischen dem Füllkörper und dem Grundkörper ist allein durch zumindest eine Prägestelle gebildet. Dadurch kann die auf die Hohlkammerwand wirkende Verformung auf einen kleinstmöglichen Bereich, vorzugsweise auf einen punktförmigen Bereich, konzentriert werden, um dennoch eine hinreichende Fixierung des Füllkörpers zum Grundkörper zu erzielen.

Vorteilhafterweise ist die zumindest eine Prägestelle mit einem Prägewerkzeug gebildet. Dabei kann ein Prägestempel vorgesehen sein, der radial von außen auf den Grundkörper einwirkt. Durch eine plastische Verformung der Wand des Grundkörpers wird die Klemmung mit dem Füllkörper gebildet. Bevorzugt ist zwischen der Innenwand des Grundkörpers und der zumindest abschnittsweise ausgebildeten Anlagefläche am Außenumfang des Füllkörpers eine Flächenpressung ausgebildet. Dieser Prägestempel kann beispielsweise eine zylindrische, kugelförmige oder kegelförmige Prägefläche oder dergleichen aufweisen.

In dem Bereich des Füllkörpers, in welchem die Kontur der zumindest abschnittsweise ausgebildeten Anlagefläche am Außenumfang dem Innenumfang des Hohlraums entspricht, ist die zumindest eine Prägestelle eingebracht. Dadurch kann bei einer nur geringen plastischen Verformung des Grundkörpers eine flächenförmige Pressung oder Klemmung zum Füllkörper erzielt werden, wodurch die auf den Füllkörper in der Fixierposition wirkende Haltekraft verstärkt ist.

Zur Fixierung des Füllkörpers kann nur eine Prägestelle vorgesehen sein. Ebenso können mehrere Prägestellen in einer radialen Ebene zur Längsachse des Grundkörpers vorgesehen sein. Des Weiteren können auch mehrere entlang der Längsachse des Hohlkörpers zueinander beabstandete Prägestellen und/oder in radialer Richtung versetzt zueinander eingebracht sein. Auch können in mehreren radialen Ebenen beabstandet zueinander mehrere Prägestellen eingebracht sein.

Die Länge des Füllkörpers entlang der Längsachse des Grundkörpers ist zumindest größer als die zumindest eine sich in Längsrichtung erstreckende Prägestelle ausgebildet. Bevorzugt ist die zumindest eine Anlagefläche am Füllkörper in axialer Richtung und/oder in radialer Richtung gleich oder größer als die Prägestelle ausgebildet. Dadurch kann bei einer kleinen flächigen Erstreckung der Prägestelle eine hohe Haltekraft und Klemmkraft möglich sein.

Vorteilhafterweise weist der Füllkörper in radialer Richtung zwischen den zumindest abschnittsweise am Außenumfang ausgebildeten Anlageflächen Abflachungen oder Einbuchtungen auf. Solche Abflachungen oder Einbuchtungen können den Medien- und/oder Gasaustausch im Inneren zwischen zwei benachbarten Hohlkörperabschnitten ermöglichen. Auch kann durch diese Abflachung beispielsweise eine Drosselstelle gebildet sein, sofern der Hohlkörper mit einem Medium durchströmt wird. Ebenso können diese Einbuchtungen oder Abflachungen Halteflächen für eine Greifeinrichtung zum Einführen des Füllkörpers in den Grundkörper sein.

Der Füllkörper ist bevorzugt aus einem Vollmaterial ausgebildet. Dieser kann vor oder nach dem Einbringen in den Hohlraum bearbeitet werden, wie beispielsweise dem Einbringen einer Durchgangsbohrung.

Des Weiteren weist der rotationssymmetrische Hohlkörper einen Grundkörper mit einer zylindrischen Innenwand auf, deren Durchmesser vorzugsweise über die gesamte Länge des Grundkörpers gleich ist. Dadurch können mehrere gleiche Füllkörper in vorbestimmten Abständen in den zylindrischen Grundkörper, insbesondere eine Welle, eingesetzt werden, um Funktionsbereiche bedarfsgemäß auszubilden.

Vorteilhafterweise ist des Weiteren an einem stirnseitigen Ende des Grundkörpers ein Flansch vorgesehen und vorzugsweise der Füllkörper einstückig an dem Flansch ausgebildet. Dies ermöglicht eine Bauteilreduzierung, sofern im Endbereich des Hohlkörpers ein Füllkörper vorzusehen ist und in diesem Endbereich auch ein Flansch anzubringen ist, der beispielsweise eine Antriebskomponente aufweist oder aufnimmt.

Die der Erfindung zugrunde liegende Aufgabe wird des Weiteren durch ein Verfahren zur Herstellung von einem rotationssymmetrischen Hohlkörper mit einem Grundkörper, entlang dessen Längsachse sich ein Hohlraum erstreckt, bei dem ein Füllkörper an einem stirnseitigen Ende des Grundkörpers in den Hohlraum des Grundkörpers eingesetzt wird, darauffolgend der Füllkörper axial entlang der Längsachse des Grundkörpers in eine Fixierposition übergeführt und der Füllkörper in der Fixierposition mit dem Grundkörper durch eine Klemmung fixiert wird, um einen Funktionsbereich zu bilden. Die Klemmung zwischen dem Füllkörper und dem Grundkörper wird durch zumindest eine Prägestelle gebildet. Dieses Verfahren weist den Vorteil auf, dass ein rotationssymmetrischer Hohlkörper, der aus einem hohlen Grundkörper besteht, wie beispielsweise einem Rohr, einer Welle, einem Schaft oder dergleichen, ein geringes Gewicht aufweist, jedoch in einzelnen Bereichen durch den Füllkörper verstärkt oder gefüllt ist, um einen Funktionsbereich auszubilden, wie dieser bei einem aus einem Vollmaterial bestehenden Grundkörper gegeben ist. Die zwischen den einzelnen Funktionsbereichen eines Hohlkörpers liegenden Bereiche sind jedoch nur durch die den inneren Hohlraum umgebende Wand des Grundkörpers in der Leichtbauweise ausgebildet. Dadurch kann ein gewichtsreduzierter rotationssymmetrischer Hohlkörper geschaffen werden, der Funktionsbereiche umfasst wie bei einem Rotationskörper aus einem Vollmaterial. Solche Funktionsbereiche können beispielsweise zur Aufnahme von einem Stift, federgelagerten Kugeln oder auch zur Trennung zwischen zwei benachbarten Hohlräumen dienen.

Zur Bildung des zumindest einen Funktionsbereiches wird ein Füllkörper in den Grundkörper eingesetzt, dessen Außenumfang durch zumindest eine abschnittsweise ausgebildete Anlagefläche gebildet ist, die einer Kontur der Innenwand des Hohlraums entspricht, wobei der Außenumfang des Füllkörpers kleiner als der Umfang der Innenwand des Hohlraums ist. Dadurch kann ein einfaches Einsetzen und Verschieben des Füllkörpers innerhalb des Hohlraumes erfolgen.

Bevorzugt ist die Längserstreckung des Füllkörpers in axialer Richtung zur Längsachse des Grundkörpers kleiner als der Grundkörper. Insbesondere ist der Füllkörper um ein Vielfaches kleiner als die Länge des Grundkörpers ausgebildet. Dadurch kann in der Gesamtheit die Masse des rotationssymmetrischen Hohlkörpers erheblich reduziert werden, so dass quasi nur im Funktionsbereich ein im Wesentlichen gebildeter Vollquerschnitt oder sogar Vollquerschnitt vorgesehen ist.

Die Klemmung zwischen dem Füllkörper und der Wand des Grundkörpers wird durch eine Prägestelle, insbesondere eine radial von außen eingebrachte Prägestelle, gebildet. Dadurch kann die Klemmung in einem nur kleinen Bereich am äußeren Umfang des Grundkörpers eingebracht werden, um eine sichere Fixierung des Füllkörpers zu erzielen.

Vorteilhafterweise wird die Prägestelle durch ein Prägewerkzeug eingebracht, welches radial von außen auf den Grundkörper zugeführt wird, wobei ein Wandabschnitt des Grundkörpers, der dem Füllkörper in der Fixierposition gegenüberliegt, radial nach innen gedrückt wird, so dass der Füllkörper in der Fixierposition geklemmt gehalten wird. Die Prägestelle kann an der äußeren Umfangsfläche des Grundkörpers eine Vertiefung gegenüber der Umfangsfläche bewirken. Durch die Einbringung der Prägestelle kann eine schnelle und sichere Fixierung des Füllkörpers im Hohlkörper erzielt werden.

Vorteilhafterweise wird die Prägestelle bevorzugt in dem Bereich eingebracht, in welchem die zumindest eine abschnittsweise ausgebildete Anlagefläche am Außenumfang des Füllkörpers der Kontur der Innenwand des Grundkörpers entspricht. Dadurch kann ergänzend ein hinreichender Formschluss, insbesondere eine Flächenpressung, erzielt werden.

Bevorzugt werden zwei einander gegenüberliegende Prägestellen eingebracht. Vorzugsweise sind auch zwei einander gegenüberliegende Anlageflächen am Außenumfang des Füllkörpers vorgesehen, so dass entlang einer Fixierachse die einander gegenüberliegenden Prägestellen und die einander gegenüberliegenden Anlageflächen ausgerichtet sind. Diese Fixierachse kann mehrere Winkelgrade versetzt zu beispielsweise einer Bohrungsachse im Funktionsbereich, insbesondere im Füllkörper und dem Grundkörper, sein, wobei die Bohrung im Füllkörper bereits vor dem Einbringen in den Grundkörper oder auch nach dem Fixieren des Füllkörpers im Grundkörper eingebracht sein kann. Bevorzugt erstreckt sich der Funktionsbereich im Füllkörper, in dem die Anlageflächen durchquert werden und sofern Abflachungen vorhanden sind, benachbart zu den Abflachungen.

Eine weitere alternative Ausgestaltung der Erfindung sieht vor, dass mehrere über den Umfang verteilt angeordnete Prägestellen eingebracht werden. Auch kann nur eine Prägestelle genügen.

Der Füllkörper wird bevorzugt mit einer Greifvorrichtung in den Hohlraum des Hohlkörpers eingeführt und in der Fixierposition ausgerichtet. Die Ausrichtung in der Fixierposition kann sowohl in axialer Richtung bezüglich der Längsachse des Grundkörpers und/oder in radialer Richtung erfolgen. In radialer Richtung ist eine Ausrichtung insbesondere dann vorgesehen, wenn die Anlagefläche am Außenumfang nur abschnittsweise in Umfangsrichtung vorgesehen ist und/oder wenn bereits Funktionselemente in den Füllkörper eingebracht sind, die eine spezielle Ausrichtung zum Hohlkörper erfordern.

Die Greifvorrichtung ist bevorzugt als ein Vakuumgreifer oder Magnetgreifer ausgebildet. Alternativ können die zwischen den Anlageflächen am Füllkörper ausgebildeten Abschnitte, insbesondere Abflachungen oder Einbuchtungen, als Greiffläche ausgebildet sein, an welchem ein Greifelement kraft- und/oder formschlüssig angreifen kann.

Nach dem Einbringen und Fixieren des zumindest einen Füllkörpers in dem Grundkörper kann der rotationssymmetrische Hohlkörper durch weitere Schritte bearbeitet werden. Beispielsweise kann eine äußere Umfangsfläche des Grundkörpers bearbeitet werden, wie beispielsweise durch Abdrehen der äußeren Umfangsfläche. Dadurch kann auch die zumindest eine Prägestelle entfernt werden. Jedenfalls beeinträchtigt die zumindest eine Prägestelle die Nachbearbeitung nicht. Selbst wenn die Prägestelle durch eine Nachbearbeitung des Außenumfangs des Grundkörpers entfernt werden sollte, beeinflusst dies die Klemmung zwischen einer Innenwand des Grundkörpers und dem Füllkörper nicht. Des Weiteren kann im Funktionsbereich des Hohlkörpers eine Bearbeitung erfolgen, wie beispielsweise die Einbringung einer Bohrung oder das Einsetzen von weiteren Bauelementen und/oder Funktionsteilen in den Füllkörper.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine perspektivische Ansicht eines erfindungsgemäßen rotationssymmetrischen Hohlkörpers,
Figur 2 eine schematische Seitenansicht des Hohlkörpers gemäß Figur 1,
Figur 3 eine schematische Schnittansicht entlang der Linie B-B in Figur 2,
Figur 4 einen schematischen Längsschnitt des Hohlkörpers mit einem darin angeordneten Füllkörper,
Figur 5 einen schematischen Längsschnitt eines ersten Anwendungsbeispiels, und
Figur 6 einen schematischen Längsschnitt eines alternativen Anwendungsbeispiels zu Figur 5.

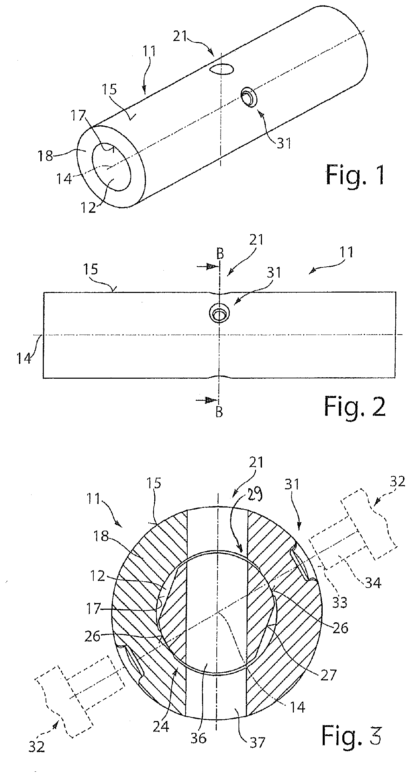

In Figur 1 ist eine perspektivische Ansicht eines rotationssymmetrischen Hohlkörpers 11 dargestellt. Dieser rotationssymmetrische Hohlkörper 11 umfasst einen Grundkörper 18 mit zumindest einem Hohlraum 12, der sich entlang einer Längsachse 14 des Grundkörpers 18 erstreckt. Vorzugsweise erstreckt sich der Hohlraum 12 entlang des gesamten Grundkörpers 18. Der Grundkörper 18 umfasst eine äußere Umfangsfläche 15 sowie eine Innenwand 17, durch deren Abstand die Dicke einer Wand des Grundkörpers 18 gebildet ist. Die Innenwand 17 begrenzt radial nach außen das Volumen des Hohlraumes 12. Im Ausführungsbeispiel ist der rotationssymmetrische Hohlkörper 11 als Hohlzylinder ausgebildet. Weitere geometrische Querschnitte, welche vorzugsweise rotationssymmetrisch ausgebildet sind, wie beispielsweise ein quadratischer, sechs- oder achteckiger Querschnitt oder dergleichen als auch ein dreieckiger Querschnitt in Form eines gleichseitigen Dreiecks, sind ebenso denkbar.

Der Hohlkörper 11 umfasst beispielsweise einen Funktionsbereich 21. Dieser Funktionsbereich 21 weist beispielhaft gemäß der Ausführungsform in Figur 1 eine Bohrung auf.

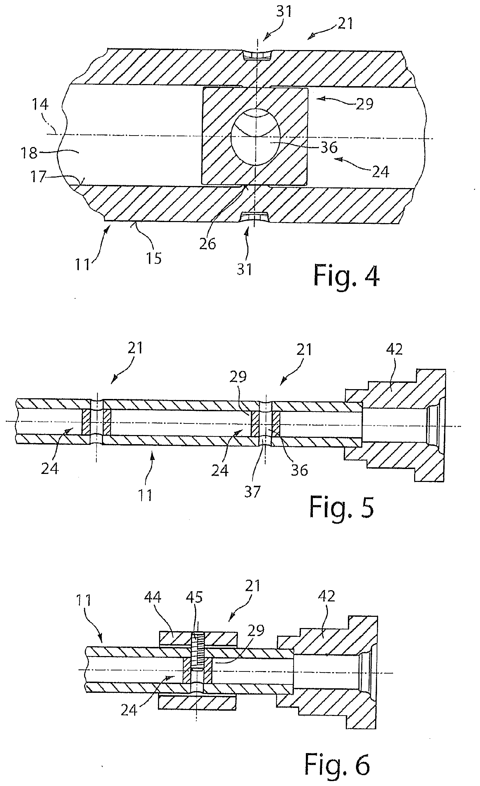

In Figur 2 ist eine schematische Seitenansicht des Hohlkörpers 11 gemäß Figur 1 dargestellt. Der Funktionsbereich 21 des Hohlkörpers 11 ist durch eine Schnittansicht entlang der Linie B-B gemäß Figur 2 in Figur 3 ersichtlich. In Figur 4 ist ein Längsschnitt des Hohlkörpers 11 gemäß Figur 1 dargestellt, aus welchem ebenfalls der Funktionsbereich 21 ersichtlich ist.

Zur Bildung des Funktionsbereiches 21 ist in den Grundkörper 18 ein Füllkörper 24 eingesetzt. Dieser Füllkörper 24 weist einen radialen Außenumfang auf, der zumindest eine Anlagefläche 26 umfasst. Im Ausführungsbeispiel sind zwei einander gegenüberliegende Anlageflächen 26 ausgebildet. Die Kontur der Anlagefläche 26 entspricht vorteilhafterweise in radialer Richtung einer Kontur der Innenwand 17. Zwischen den Anlageflächen 26 kann eine Abflachung 27 oder eine Einbuchtung oder dergleichen ausgebildet sein.

Die zumindest eine sich in radialer Richtung abschnittsweise erstreckende Anlagefläche 26 des Füllkörpers 24 kann sich in axialer Richtung vorteilhafterweise vollständig entlang der Länge des Füllkörpers 24 erstrecken, wie beispielsweise aus Figur 4 hervorgeht, jedoch zumindest entlang dem Bereich der Klemmung.

Die Anlagefläche 26 kann - soweit diese sich in axialer und radialer Richtung erstreckt - als durchgehende Fläche ausgebildet sein. Die Anlagefläche 26 kann auch als gewellte oder geriffelte Fläche ausgebildet sein oder sonstige Oberflächenkonturen aufweisen, die eine erhöhte Rauheit bilden.

Zur Fixierung des Füllkörpers 24 in einer Fixierposition 29 zur Bildung des Funktionsbereiches 21 ist zwischen dem Grundkörper 18 und dem Füllkörper 24 eine Klemmung vorgesehen. Die Klemmung wirkt zwischen der zumindest einen Anlagefläche 26 des Füllkörpers 24 und einem Abschnitt der Innenwand 17 des Hohlraumes 12. Zwischen dem Füllkörper 24 und dem Grundkörper 18 ist dadurch eine innenliegende Klemmung ausgebildet, welche unabhängig von einer Kontur oder einer Verlaufsform der Außenumfangsfläche 15 des Grundkörpers 18 ist. Auch sind keine zusätzlichen Befestigungselemente zur Bildung der inneren Klemmung erforderlich. Durch zumindest eine linien- oder flächenförmige Pressung zwischen dem zumindest einem Abschnitt der Innenwand 17 des Hohlraumes 12 und der Anlagefläche 26 des Füllkörpers 24 ist die Klemmung gebildet. Bevorzugt wird ein Wandabschnitt des Grundkörpers 18 radial in Richtung auf den Füllkörper 24 gedrückt, um die Klemmung mit dem Füllkörper 24, insbesondere der zumindest einen Anlagefläche 26, zu erzielen.

Die Klemmung wird gemäß einer bevorzugten Ausführungsform durch das Einbringen von zumindest einer Prägestelle 31 erzielt. Dabei ist vorgesehen, dass mit einem schematisch und strichliniert dargestellten Prägewerkzeug 32 radial von außen auf die Umfangsfläche 15 des Grundkörpers 12 eingewirkt wird, um mittels einer Prägefläche 33 eines Prägestempels 34 eine Verformung dahingehend zu erwirken, dass die Wand des Grundkörpers 18 partiell nach innen gedrückt wird, um klemmend an den Füllkörper 24 anzuliegen. Bevorzugt sind zwei abschnittsweise ausgebildete Anlageflächen 26 des Füllkörpers 24 im Bereich der vorzugsweise einander gegenüberliegenden Prägestellen 31 ausgebildet, so dass eine hinreichende Klemmung zur Fixierung des Füllkörpers 24 im Funktionsbereich 21 gegeben ist.

Die Verformung der Wand des Grundkörpers 18 erfolgt bevorzugt nur im Bereich der Prägefläche 33 des Prägestempels 34, wie aus dem Vollquerschnitt gemäß Figur 4 und im Längsschnitt gemäß Figur 4 hervorgeht. Nach dem Einbringen der Prägestelle 31 kann diese als Vertiefung in der Umfangsfläche 15 des Grundkörpers 18 dienen.

Der Außenumfang der zumindest zwei Anlageflächen 26 des Füllkörpers 24 ist kleiner als der Durchmesser der Innenwand 17 des Hohlraumes 12. Vorzugsweise sind der Durchmesser der Innenwand 17 zum Außenumfang des Füllkörpers 24 durch eine Übergangspassung oder Spielpassung bemessen, so dass bereits bei einer geringen Verformung der Wand des Grundkörpers 18 die Klemmung erfolgt.

Bei dem im Ausführungsbeispiel gezeigten Füllkörper 24 ist in dem Füllkörper 24 eine Bohrung 36 angeordnet, welche zu einer Durchgangsbohrung 37 des Hohlkörpers 11 fluchtet. Gemäß einer ersten Ausführungsform kann vorgesehen sein, dass die Bohrung 36 und die Durchgangsbohrung 37 jeweils getrennt eingebracht wurden, bevor der Füllkörper 24 in den Grundkörper 18 eingesetzt ist. Bevorzugt wird der Füllkörper 24 jedoch in die Fixierposition 29 im Grundkörper 18 übergeführt, geklemmt und darauffolgend in einem Arbeitsgang gemeinsam eine fluchtende Bohrung 36 zur Durchgangsbohrung 37 eingebracht.

Abweichend zu dem in den Figuren 3 und 4 dargestellten Ausführungsbeispiel kann auch eine Prägestelle 31 genügen. Alternativ können mehrere Prägestellen 31 in einer radialen Ebene zum Füllkörper ausgebildet sein. Alternativ können auch in axialer Richtung mehrere Prägestellen 31 ausgebildet sein. Diese Prägestellen 31 können entlang einer gemeinsamen Achse parallel zur Längsachse 14 oder auch versetzt zueinander vorgesehen sein.

Die Länge des Füllkörpers 24 entlang der Längsachse 14 des Hohlkörpers gesehen ist vorteilhafterweise um ein Vielfaches kleiner als die Länge des Grundkörpers 18. Die Länge des Füllkörpers 24 entlang der Längsachse 14 erstreckt sich bevorzugt zumindest um die sich in Richtung der Längsachse 14 erstreckende Länge der Prägestelle 31. Hauptsächlich wird die Länge des Füllkörpers 24 durch den Funktionsbereich 21 gebildet. Sofern eine Bohrung eingebracht wird, bestimmt die Größe der Bohrung die Länge des Füllkörpers 24, so dass benachbart noch eine hinreichende Wandstärke vorgesehen ist.

Die zumindest eine Anlagefläche 26 kann in axialer Erstreckung über die gesamte Länge des Füllkörpers 24 konstant sein. Alternativ kann sich die Anlagefläche 26 bezüglich deren Länge auch nur entlang der Prägestelle 31 in Längsrichtung gesehen erstrecken.

In Figur 5 ist ein schematischer Längsschnitt des Hohlkörpers 11 gemäß Figur 1 dargestellt, wobei an einem stirnseitigen Ende beispielsweise ein Flansch 42 angeordnet sein kann. Aus der schematischen Schnittansicht des Hohlkörpers 11 geht hervor, dass ein, zwei oder mehrere Füllkörper 24 entlang der Länge des Hohlkörpers 11 eingesetzt sein können, um jeweils einen Funktionsbereich 21 auszubilden. Der Funktionsbereich 21 umfasst beispielsweise eine Durchgangsbohrung. Zur Aufnahme oder zum Antrieb des Hohlkörpers 11, beispielsweise als Antriebswelle, Rotationswelle oder dergleichen, kann der Flansch 42 an einem stirnseitigen Ende des Grundkörpers 18 aufgepresst, angeschweißt oder durch eine Schraubbefestigung verbunden sein. An diesem Flansch 42 kann ein Antriebselement, beispielsweise ein Zahnrad, ausgebildet, aufgepresst oder befestigt sein. Auch kann dieser Flansch 42 lediglich als Lagerstelle, insbesondere Radiallagerung, dienen und bevorzugt eine Gleit- oder Wälzlagerung umfassen.

In Figur 6 ist ein weiterer Anwendungsfall des rotationssymmetrischen Hohlkörpers zu Figur 5 dargestellt. Der Funktionsbereich 21 kann dahingehend ausgebildet sein, dass der äußeren Umfangsfläche 15 ein Anbauteil 44, wie beispielsweise ein Justier- oder Anschlagring, eine Buchse oder eine Hülse zugeordnet ist. Das Anbauteil 44 kann durch ein Verbindungselement 45 zum Funktionsbereich 21 fixiert, insbesondere lösbar fixiert werden. Bei dem Anwendungsfall in Figur 6 ist vorgesehen, dass beispielsweise das Anbauteil 44 als ein Ring ausgebildet ist, welches durch ein als Gewindestift ausgebildetes Verbindungselement 45 fest mit dem Füllkörper 24 verbunden ist. Dieses Anbauteil 44 ist somit fest dem Funktionsbereich 21 zugeordnet. Durch beispielsweise das Einbringen von einem lösbaren Verbindungselement 45 kann dieses Anbauteil 44 auch wieder entfernt werden. Alternativ kann auch vorgesehen sein, dass anstelle eines lösbaren Verbindungselementes 45 ein unlösbares Verbindungselement 45 eingebracht wird, wie beispielsweise ein Passstift oder eine Vernietung, um solche Anbauteile 44 unlösbar zum Funktionsbereich 21 zu fixieren.

Des Weiteren kann vorgesehen sein, dass das oder die Anbauteile 44 beispielsweise längs der Längsachse 14 verschiebbar sind und auch in einer Rastposition gehalten werden können. Hierfür sind beispielsweise in dem Füllkörper 24 zwei durch eine Feder gelagerte Kugeln vorgesehen, die jeweils an radial nach innen zum Funktionsbereich 21 weisenden Vertiefungen der Hülse eingreifen. Dadurch kann zwischen den Kugeln und der Hülse eine lösbare Rastverbindung geschaffen werden, um die Hülse auch aus einer Rastposition in eine weitere Position in axialer Richtung entlang der Längsachse 14 verschieben zu können. Alternativ zur Anordnung von einer zwischen zwei Kugeln gelagerter Feder zur Bildung einer lösbaren Rastverbindung kann auch ein Gewindeeinsatz mit einer gefederten Rastkugel ein- oder beidseitig in den Funktionsbereich 21 eingebracht werden.

Die Anordnung der lösbaren Rastverbindung ist nur beispielhaft. Der Funktionsbereich 21 kann mit weiteren Elementen, Komponenten oder dergleichen ergänzend ausgebildet sein, um zusätzliche Funktionen zu erfüllen. Anstelle der Kugeln 47 können Stifte vorgesehen sein. Alternativ können auch Gewindeeinsätze eingebracht werden, welche eine federgelagerte Kugel aufnehmen.

Unter "rotationssymmetrischen Hohlkörpern" werden auch rotierende Wellen, Antriebe oder dergleichen verstanden, die zumindest eine Unwucht aufweisen und/oder zumindest teilweise entlang der Längsachse einen symmetrischen und/oder asymmetrischen Verlauf aufweisen.

## Patentansprüche

1. Rotationssymmetrischer Hohlkörper mit einem Grundkörper (18) und einem entlang einer Längsachse (14) des Grundkörpers (18) sich erstreckenden Hohlraum (12), der durch eine Innenwand (17) des Grundkörpers (18) begrenzt ist, wobei in den Hohlraum (12) zumindest ein Füllkörper (24) eingesetzt ist, dessen Längserstreckung in axialer Richtung zur Längsachse (14) des Grundkörpers (18) kleiner als die Länge des Grundkörpers (18) ist und wobei der Füllkörper (24) zum Grundkörper (18) in einer Fixierposition (24) durch zumindest eine zwischen dem Füllkörper (24) und dem Grundkörper (18) wirkende Klemmung fixiert und durch den Füllkörper (24) ein Funktionsbereich (21) im Grundkörper (18) gebildet ist, **dadurch gekennzeichnet, dass** die Klemmung zwischen dem Füllkörper (24) und dem Grundkörper (18) allein durch zumindest eine Prägestelle (31) gebildet ist , und die eine Prägestelle (31) oder die mehreren Prägestellen (31) in einer oder mehreren radialen Ebenen zur Längsachse des Grundkörpers (18) eingebracht ist oder sind.

2. Hohlkörper nach Anspruch 1, **dadurch gekennzeichnet, dass** der Füllkörper (24) einen Außenumfang mit zumindest einer Anlagefläche (26) aufweist, die sich in Umfangsrichtung zumindest abschnittsweise erstreckt und vorteilhafterweise der Kontur der Innenwand (17) des Hohlraums (12) entspricht und dass der Außenumfang des Füllkörpers (24) kleiner als der Innenumfang der Innenwand (17) des Grundkörpers (18) ausgebildet ist und vorzugsweise die zumindest eine den Außenumfang bildende Anlagefläche (26) des Füllkörpers (24) mit einer Übergangs- oder Spielpassung zum Innenumfang des Hohlraums (12) bemessen ist.

3. Hohlkörper nach Anspruch 2, **dadurch gekennzeichnet, dass** die Prägestelle (31) mit einem Prägewerkzeug (32), insbesondere einem Prägestempel (34), gebildet ist, die radial von außen auf den Grundkörper (18) aufgebracht ist.

4. Hohlkörper nach Anspruch 2 oder 3, **dadurch gekennzeichnet, dass** die zumindest eine Prägestelle (31) in dem Bereich des Füllkörpers (24) in den Grundkörper (18) eingebracht ist, in welchem die zumindest eine abschnittsweise ausgebildete Anlagefläche (26) des Füllkörpers (24) dem Innenumfang des Hohlraumes (12) entspricht.

5. Hohlkörper nach einem der Ansprüche 2 bis 4, **dadurch gekennzeichnet, dass** die Länge des Füllkörpers (24) entlang der Längsachse (14) des Grundkörpers (18) zumindest größer als die Längserstreckung der Prägestelle (31) der Längsachse (14) ist und vorzugsweise die Länge der zumindest einen Anlagefläche (26) am Außenumfang des Füllkörpers (24), welche sich in radialer Richtung erstreckt, zumindest der radialen Erstreckung der Prägestelle (31) entspricht.

6. Hohlkörper nach einem der vorhergehenden Ansprüche, **dadurch gekennzeichnet, dass** der Füllkörper (24) in radialer Richtung zwischen den zumindest zwei abschnittsweise am Außenumfang ausgebildeten Anlageflächen (26) eine Abflachung (27) oder Einbuchtung aufweist.

7. Hohlkörper nach einem der vorhergehenden Ansprüche, **dadurch gekennzeichnet, dass** der Füllkörper (24) aus einem Vollmaterial besteht.

8. Hohlkörper nach einem der vorhergehenden Ansprüche, **dadurch gekennzeichnet, dass** der Grundkörper (18) eine zylindrische Innenwand (17) aufweist, deren Durchmesser vorzugsweise über die gesamte Länge des Grundkörpers (18) gleich ist.

9. Hohlkörper nach einem der vorhergehenden Ansprüche, **dadurch gekennzeichnet, dass** an einem stirnseitigen Ende (41) des Grundkörpers (18) ein Flansch (42) vorgesehen ist und vorzugsweise ein Füllkörper (24) einstückig an dem Flansch (42) vorgesehen ist.

10. Verfahren zur Herstellung eines rotationssymmetrischen Hohlkörpers (11) mit einem Grundkörper (18), entlang dessen Längsachse (14) sich ein Hohlraum (12) erstreckt,
- bei dem ein Füllkörper (24) an einem stirnseitigen Ende (41) des Grundkörpers (18) in den Hohlraum (12) eingesetzt wird,
- bei dem der Füllkörper (24) axial entlang der Längsachse (14) des Grundkörpers (18) in eine Fixierposition (29) übergeführt wird, und
- bei dem der in der Fixierposition (29) angeordnete Füllkörper (24) mit dem Grundkörper (18) durch eine zwischen dem Füllkörper (24) und dem Grundkörper (18) wirkenden Klemmung fixiert und ein Funktionsbereich (21) gebildet wird, **dadurch gekennzeichnet, dass** die Klemmung zwischen dem Füllkörper (24) und dem Grundkörper (18) allein durch zumindest eine Prägestelle (31) gebildet wird, und die eine Prägestelle (31) oder die mehreren Prägestellen (31) in einer oder mehreren radialen Ebenen zur Längsachse des Grundkörpers (18) eingebracht wird oder werden.

11. Verfahren nach Anspruch 10, **dadurch gekennzeichnet, dass** an dem Füllkörper (24) ein Außenumfang ausgebildet wird, der zumindest abschnittsweise in radialer Richtung eine Anlagefläche (26) umfasst, die an eine Kontur der Innenwand (17) des Hohlraums (12) angepasst wird und der Außenumfang des Füllkörpers (24) kleiner als der Umfang der Innenwand (17) des Hohlraums (12) ausgebildet ist.

12. Verfahren nach Anspruch 10 oder 11, **dadurch gekennzeichnet, dass** zwischen dem Füllkörper (24) und dem Grundkörper (18) vorzugsweise eine radiale Klemmung durch eine radiale Prägestelle (31) ausgebildet wird und vorzugsweise ein Prägewerkzeug (32) radial von außen auf den Grundkörper (18) zugeführt und in dem Bereich, in dem der Füllkörper (24) in der Fixierposition (29) angeordnet ist, eingedrückt wird, so dass der Füllkörper (24) in der Fixierposition (29) geklemmt gehalten wird.

13. Verfahren nach Anspruch 12, **dadurch gekennzeichnet, dass** das Prägewerkzeug (32) zumindest einen Prägestempel (34) aufweist, der radial von außen die zumindest eine radiale Prägestelle (31) einbringt und ein Abschnitt der Innenwand (17) des Hohlraumes (12) zur klemmenden Anlage an der zumindest einen Anlagefläche (26) des Füllkörpers (24) übergeführt wird.

14. Verfahren nach Anspruch 12 oder 13, **dadurch gekennzeichnet, dass** zwei einander gegenüberliegende oder mehrere Prägestellen (31), vorzugsweise in einer radialen Ebene, in den Grundkörper (18) eingebracht werden, und vorzugsweise die sich zumindest abschnittsweise am Außenumfang des Füllkörpers (24) erstreckende Anlagefläche (26) zur Prägestelle (31) ausgerichtet wird.

15. Verfahren nach Anspruch 10 bis 14, **dadurch gekennzeichnet, dass** der Füllkörper (24) mit einer Greifvorrichtung in den Hohlraum (12) des Hohlkörpers (11) eingeführt und in der Fixierposition (29) ausgerichtet und vorzugsweise in der Fixierposition (29) gehalten wird, bis die Klemmung eingebracht ist und vorzugsweise der Füllkörper (24) mit einem Sauggreifer, Magnetgreifer oder mit einem Greifelement kraft- und/oder formschlüssig gehalten und in die Fixierposition (29) im Hohlkörper (11) übergeführt wird.

## Claims

1. Rotationally symmetrical hollow body having a base body (18) and a cavity (12) extending along a longitudinal axis (14) of the base body (18), said cavity (12) being limited by an inner wall (17) of the base body (18), wherein at least one filling body (24) is inserted into the cavity (12), the longitudinal extension of said filling body (24) being shorter than the length of the base body (18), and wherein the filling body (24) is fixed in relation to the base body (18) in a fixing position (24) by at least one clamp acting between the filling body (24) and the base body (18), and a functional region (21) is formed in the base body (18) by the filling body (24) **characterised in that** the clamp between the filling body (24) and the base body (18) is formed only by at least one embossing point (31) and the one embossing point (31) or the multiple embossing points (31) lying in one or more radial planes with respect to the longitudinal axis of the base body (18) are introduced.

2. Hollow body according to claim 1, **characterised in that** the filling body (24) has an outer periphery having at least one contact surface (26), which extends at least sectionally in the peripheral direction of the contour of the inner wall (17) and advantageously corresponds to the contour of the inner wall (17) of the cavity (12), and the outer periphery of the filling body (24) is formed to be smaller than the inner periphery of the inner wall (17) of the base body (18), and preferably the at least one contact surface (26) of the filling body (24) forming the outer periphery is calculated with a transition fit or clearance fit in relation to the inner periphery of the cavity (12).

3. Hollow body according to claim 2, **characterised in that** the embossing point (31) is formed with an embossing tool (32), in particular an embossing stamp (34), said embossing point (31) being applied radially from the outside on the base body (18).

4. Hollow body according to claim 2 or 3, **characterised in that** the at least one embossing point (31) is introduced into the base body (18) in the region of the filling body (24), in which base body (18) the at least one sectionally formed contact surface (26) of the filling body (24) corresponds to the inner periphery of the cavity (12).

5. Hollow body according to one of claims 2 to 4, **characterised in that** the length of the filling body (24) is at least greater than the longitudinal extension of the embossing point (31) of the longitudinal axis (14) along the longitudinal axis (14) of the base body (18) and preferably the length of the at least one contact surface (26) on the outer periphery of the filling body (24), which extends in the radial direction, corresponds at least to the radial extension of the embossing point (31) .

6. Hollow body according to one of the preceding claims, **characterised in that** the filling body (24) has a flattened portion (27) or indentation in the radial direction between the at least two contact surfaces (26) formed sectionally on the outer periphery.

7. Hollow body according to one of the preceding claims, **characterised in that** the filling body (24) consists of a solid material.

8. Hollow body according to one of the preceding claims, **characterised in that** the base body (18) has a cylindrical inner wall (17), the diameter of which is preferably the same across the whole length of the base body (18).

9. Hollow body according to one of the preceding claims, **characterised in that** a flange (42) is provided on the front face end (41) of the base body (18), and preferably a filling body (24) is provided integrally on the flange (42).

10. Method for producing a rotationally symmetrical hollow body (11) having a base body (18), a cavity (12) extending along the longitudinal axis (14) of said base body (18),
- in which a filling body (24) is inserted into the cavity (12) on the front face end (41) of the base body (18),
- in which the filling body (24) is transferred into a fixing position (29) axially along the longitudinal axis (14) of the base body (18), and
- in which the filling body (24) arranged in the fixing position (29) is formed with the base body (18) by a clamp acting between the filling body (24) and the base body (18), and a functional region (21) is formed, **characterised in that** the clamp between the filling body (24) and the base body (18) is formed only by at least one embossing point (31) and the one embossing point (31) or the multiple embossing points (31) lying in one or more radial planes with respect to the longitudinal axis of the base body (18) are introduced.

11. Method according to claim 10, **characterised in that** an outer periphery is formed on the filling body (24), said outer periphery at least sectionally comprising a contact surface (26) in the radial direction, said contact surface (26) being adjusted to a contour of the inner wall (17) of the cavity (12), and the outer periphery of the filling body (24) is formed to be smaller than the periphery of the inner wall (17) of the cavity (12).

12. Method according to claim 10 or 11, **characterised in that** a radial clamp is preferably formed by a radial embossing point (31) between the filling body (24) and the base body (18), and preferably an embossing tool (32) is supplied radially from the outside onto the base body (18) and is impressed in the region in which the filling body (24) is arranged in the fixing position (29), such that the filling body (24) is held in a clamped manner in the fixing position (29).

13. Method according to claim 12, **characterised in that** the embossing tool (32) has at least one embossing stamp (34) which introduces the at least one radial embossing point (31) radially from the outside, and a section of the inner wall (17) of the cavity (12) is transferred to the at least one contact surface (26) of the filling body (24) for the clamping contact.

14. Method according to claim 12 or 13, **characterised in that** two or more embossing points (31) opposite one another are introduced into the base body (18), preferably in a radial plane, and, preferably, the contact surface (26) extending at least sectionally on the outer periphery of the filling body (24) is aligned towards the embossing point (31).

15. Method according to claim 10 to 14, **characterised in that** the filling body (24) is introduced into the cavity (12) of the hollow body (11) with a gripping device and aligned in the fixing position (29) and, preferably, held in the fixing position (29) until the clamp is introduced, and preferably the filling body (24) is held frictionally and/or positively with a suction cup, magnetic gripper or with a gripping element and is transferred into the fixing position (29) in the hollow body (11).

## Revendications

1. Corps creux à symétrie de rotation pourvu d'un corps de base (18) et d'une cavité (12) qui s'étend le long d'un axe longitudinal (14) du corps de base (18) et est délimitée par une paroi intérieure (17) du corps de base (18), dans ladite cavité (12) étant inséré au moins un corps de remplissage (24) dont l'extension longitudinale en sens axial par rapport à l'axe longitudinal (14) du corps de base (18) est inférieure à la longueur dudit corps de base (18), et le corps de remplissage (24) étant fixé, dans une position de fixation (24), par rapport au corps de base (18) grâce à au moins un serrage qui agit entre le corps de remplissage (24) et le corps de base (18), et une zone fonctionnelle (21) étant formée dans le corps de base (18) par le corps de remplissage (24), **caractérisé en ce que** le serrage obtenu entre le corps de remplissage (24) et le corps de base (18) est formé uniquement par au moins une empreinte en creux (31), et que ladite empreinte en creux (31) ou ladite pluralité d'empreintes en creux (31) est réalisée dans un plan radial ou plusieurs plans radiaux par rapport à l'axe longitudinal du corps de base (18).

2. Corps creux selon la revendication 1, **caractérisé en ce que** le corps de remplissage (24) présente une circonférence extérieure pourvue d'au moins une surface d'appui (26) qui s'étend en sens circonférentiel au moins dans certaines zones et qui, de manière avantageuse, correspond au contour de la paroi intérieure (17) de la cavité (12), et **en ce que** la circonférence extérieure du corps de remplissage (24) est formée de manière à être inférieure à la circonférence intérieure de la paroi intérieure (17) du corps de base (18), et **en ce que** de préférence ladite au moins une surface d'appui (26) du corps de remplissage (24) qui forme la circonférence extérieure est dimensionnée de manière à présenter un ajustement de transition ou un ajustement avec jeu par rapport à la circonférence intérieure de la cavité (12).

3. Corps creux selon la revendication 2, **caractérisé en ce que** l'empreinte en creux (31) est réalisée avec un outil de poinçonnage (32), en particulier un poinçon (34), qui est appliqué sur le corps de base (18) de manière radiale depuis l'extérieur.

4. Corps creux selon la revendication 2 ou 3, **caractérisé en ce que** ladite au moins une empreinte en creux (31) est réalisée dans le corps de base (18), et ce dans la zone du corps de remplissage (24) dans laquelle ladite au moins une surface d'appui (26) dudit corps de remplissage (24) qui est formée dans certaines zones correspond à la circonférence intérieure de la cavité (12).

5. Corps creux selon l'une quelconque des revendications 2 à 4, **caractérisé en ce que** la longueur du corps de remplissage (24) le long de l'axe longitudinal (14) du corps de base (18) est au moins supérieure à l'extension longitudinale de l'empreinte en creux (31) le long de l'axe longitudinal (14), et **en ce que** de préférence la longueur de ladite au moins une surface d'appui (26) située sur la circonférence extérieure du corps de remplissage (24) et s'étendant en sens radial correspond au moins à l'extension radiale de l'empreinte en creux (31).

6. Corps creux selon l'une quelconque des revendications précédentes, **caractérisé en ce que** le corps de remplissage (24) présente en sens radial, entre lesdites au moins deux surfaces d'appui (26) formées dans certaines zones sur la circonférence extérieure, un aplatissement (27) ou une bosse rentrante.

7. Corps creux selon l'une quelconque des revendications précédentes, **caractérisé en ce que** le corps de remplissage (24) est réalisé en un matériau plein.

8. Corps creux selon l'une quelconque des revendications précédentes, **caractérisé en ce que** le corps de base (18) présente une paroi intérieure (17) cylindrique dont le diamètre est de préférence le même sur toute la longueur du corps de base (18).

9. Corps creux selon l'une quelconque des revendications précédentes, **caractérisé en ce qu'**une bride (42) est prévue à une extrémité frontale (41) du corps de base (18) et **en ce que** de préférence un corps de remplissage (24) est prévu en une seule pièce sur la bride (42).

10. Procédé destiné à fabriquer un corps creux (11) à rotation symétrique pourvu d'un corps de base (18) présentant un axe longitudinal (14) le long duquel s'étend une cavité (12),
- lors duquel un corps de remplissage (24) est inséré dans la cavité (12), depuis une extrémité frontale (41) du corps de base (18),
- lors duquel le corps de remplissage (24) est mis dans une position de fixation (29) par déplacement axial le long de l'axe longitudinal (14) du corps de base (18), et
- lors duquel le corps de remplissage (24) disposé dans la position de fixation (29) est fixé par rapport au corps de base (18) par un serrage qui agit entre le corps de remplissage (24) et le corps de base (18), formant ainsi une zone fonctionnelle (21),
**caractérisé en ce que** le serrage agissant entre le corps de remplissage (24) et le corps de base (18) est formé uniquement par au moins une empreinte en creux (31), et **en ce que** ladite empreinte en creux (31) ou ladite pluralité d'empreintes en creux (31) est réalisée dans un plan radial ou dans plusieurs plans radiaux par rapport à l'axe longitudinal du corps de base (18).

11. Procédé selon la revendication 10, **caractérisé en ce que** sur le corps de remplissage (24) est formée une circonférence extérieure qui comprend en sens radial, au moins dans certaines zones, une surface d'appui (26) qui est adaptée à un contour de la paroi intérieure (17) de la cavité (12) et **en ce que** la circonférence extérieure du corps de remplissage (24) est réalisée de manière à être inférieure à la circonférence de la paroi intérieure (17) de la cavité (12).

12. Procédé selon la revendication 10 ou 11, **caractérisé en ce qu'**entre le corps de remplissage (24) et le corps de base (18) est réalisé de préférence un serrage radial grâce à une empreinte en creux (31) radiale, et **en ce que** de préférence un outil de poinçonnage (32) est amené radialement depuis l'extérieur jusqu'au corps de base (18) et est appliqué sous pression dans la zone où est disposé le corps de remplissage (24) lorsqu'il se trouve dans la position de fixation (29) de sorte que ledit corps de remplissage (24) est maintenu par serrage dans la position de fixation (29).

13. Procédé selon la revendication 12, **caractérisé en ce que** l'outil de poinçonnage (32) présente au moins un poinçon (34) qui réalise radialement depuis l'extérieur ladite au moins une empreinte en creux (31) radiale et **en ce qu'**une partie de la paroi intérieure (17) de la cavité (12) vient ainsi prendre appui par serrage contre ladite au moins une surface d'appui (26) du corps de remplissage (24).

14. Procédé selon la revendication 12 ou 13, **caractérisé en ce que** deux empreintes en creux (31) opposées ou plusieurs sont réalisées, de préférence dans un plan radial, dans le corps de base (18) et **en ce que** de préférence la surface d'appui (26) qui s'étend, au moins dans certaines zones, sur la circonférence extérieure du corps de remplissage (24) est orientée vers l'empreinte en creux (31).

15. Procédé selon l'une quelconque des revendications 10 à 14, **caractérisé en ce que** le corps de remplissage (24) est inséré dans la cavité (12) du corps creux (11) et orienté dans la position de fixation (29) grâce à un dispositif de préhension et est de préférence maintenu dans ladite position de fixation (29) jusqu'à la réalisation du serrage, et **en ce que** de préférence le corps de remplissage (24) est maintenu par conjugaison de forces et/ou de forme par une ventouse aspirante, une ventouse magnétique ou un élément de préhension et est placé dans la position de fixation (29) à l'intérieur du corps creux (11).
